# EUROPÄISCHE PATENTSCHRIFT

(11) **EP 2 233 361 B1**
(45) Veröffentlichungstag und Bekanntmachung des Hinweises auf die Patenterteilung: **28.09.2011**
(21) Anmeldenummer: 10157813.6
(22) Anmeldetag: 25.03.2010
(51) Int. Cl.: B60R 3/02

(54) **Ausfahrbare Zustiegshilfe mit einem Rollersystem**
Climbing aid with a roller system
Aide à la montée avec un systéme de rouleaux

(30) Priorität: 25.03.2009 DE 202009004004 U
(43) Veröffentlichungstag der Anmeldung: 29.09.2010
(73) Patentinhaber: Gebr. Bode GmbH & Co. KG, 34123 Kassel (DE)
(72) Erfinder: Rasekhi, Abbas, 34128, Kassel (DE)
(74) Vertreter: Bauer Vorberg Kayser Patentanwälte

(56) Entgegenhaltungen:
- DE-A1-102006 005 821
- DE-U1- 9 415 254
- DE-U1-202007 000 912

## Beschreibung

Die vorliegende Erfindung betrifft eine ausfahrbare Zustiegshilfe mit einem Rollensystem, insbesondere einen Schiebetritt eines Türeinstiegs eines Personenbeförderungsfahrzeuges, wobei die Zustiegshilfe aus einer Ruhestellung in eine Gebrauchsstellung und zurück verfahrbar ist.

Derartige Zustiegs- und Zufahrtshilfen werden bei Fahrzeugen zur Personenbeförderung, beispielsweise bei Bussen oder Schienenfahrzeugen des öffentlichen Nahverkehrs eingesetzt. Sie sind in vielfältiger Form bekannt und erleichtern den Ein- und Ausstieg dadurch, dass im Bereich von Haltestellen an den Fahrzeugen verschiebbar und oftmals auch verschwenkbar gelagerte und belastbare Schiebetritte ausgefahren werden. Schiebetritte werden dabei zur Überbrückung von Spalten (beispielsweise bei Bahnsteigen) oder auch zum Höhenausgleich eingesetzt. Zustiegshilfen können als lediglich ausfahrbare Schiebetritte ausgeführt sein, sie können aber im ausgefahrenen Zustand auch auf den Untergrund, beispielsweise dem Bahnsteig abgesenkt werden, so dass sie mit aufliegen. Zustiegshilfen erleichtern oder ermöglichen Rollstuhlfahrern den Zugang in die Fahrzeuge. Nach Beendigung der Aus- und Einstiegsphase und eventuell nach dem Schließen der Fahrzeugtüren wird die Zustiegshilfe wieder in ihre Ruhestellung zurückgebracht.

Zustiegshilfen, die im ausgefahrenen Zustand nicht aufliegen und entsprechend belastbar sein müssen, werden in der Regel als Schiebetritte bezeichnet. Diese bestehen in der Regel aus einem widerstandsfähigen und starren, aber möglichst leichten Material und sind in der Regel mit einer rutschhemmenden Auflage versehen.

Im Bereich des Schiebetritts ist bei fremdbetriebenen Zustiegshilfen ein Motor vorgesehen, der den Schiebetritt aus seiner Ruhestellung in die Gebrauchsstellung heraus- und wieder zurückfährt. Begehbare Schiebetritte sind seitlich über Rollen in Führungsmitteln geführt, über die sie linear ein- und ausgefahren werden können. Motorisch betriebene Schiebetritte sind beispielsweise in der gattungsbildenden Druckschrift DE 20 2007 000 912 U1 und in der Druckschrift DE 20 2006 016 432 U1 beschrieben. Diese bauen alle verhältnismäßig hoch, was zunehmend unerwünscht ist. Fahrzeughersteller richten aufgrund ständig wachsender Anforderungen besondere Aufmerksamkeit auf Zustiegshilfen, insbesondere auf den für diesen notwendigen Einbauraum im kritischen Eingangsbereich. Die Einbautiefe und Einbauhöhe ist vom Ausfahrweg, Belastungsweg der Belastung selbst und den Dimensionen vom Führungs- und Rollensystem abhängig.

Die Aufgabe der vorliegenden Erfindung besteht darin, eine Zustiegshilfe, insbesondere einen Schiebetritt zu schaffen, mit einem kompakten und Platz sparenden Aufbau der Zustiegshilfe. Weiterhin sollen die o.g. Nachteile des Standes der Technik vermieden werden.

Erfindungsgemäß wird die Aufgabe durch eine ausfahrbare Zustiegshilfe eines Türeinstiegs eines Personenbeförderungsfahrzeuges nach Anspruch 1 gelöst.

Die erfindungsgemäße Zustiegshilfe eignet sich für sämtliche rollengeführten Zustiegshilfen, insbesondere aber für Schiebtritte. Schiebetritte müssen deshalb, weil sie nicht auf dem Untergrund aufliegen, derart stabil konstruiert sein, dass mehrere Personen gleichzeitig den Schiebetritt betreten können, ohne das dieser nach unten nachgibt oder Schaden nimmt. Dementsprechend sind insbesondere die begehbare Platte des Schiebetritts, die Führungsmittel und die darin laufenden Rollen durch Materialauswahl und Dimensionierung entsprechend ausgeführt. Insbesondere müssen die Rollen in der Lage sein, der auftretenden Belastung Stand zu halten.

Hier setzt die Erfindung an, nämlich durch Abkehr vom üblichen und weit verbreiteten Rollensystem. Das erfindungsgemäße Rollenmodul bewirkt, dass die sonst auf eine Rolle wirkende Belastung gleichmäßig auf mindestens zwei Modulrollen verteilt wird.

Die Rollenplatte ist schwenkbar an der Seite Zustiegshilfe gelagert und hat dadurch eine Art Wippenfunktion. In einer besonders vorteilhaften Ausführungsvariante sind zwei Modulrollen vorgesehen, die gleichmäßig beabstandet rechts und links der Schwenkachse der Rollenplatte angeordnet sind. Somit wird die Belastung durch eine von oben wirkende Vertikalkraft über die Platte des Schiebetritts auf das Lager der Rollenplatte und schließlich auf die beiden Rollen selbst übertragen. Bei einem derartigen Rollenmodul halbiert sich die auf die einzelne Modulrollen wirkende Kraft gegenüber der Verwendung nur einer einzigen Rolle.

Erfindungsgemäß kann vorgesehen sein, dass das Rollenmodul nicht zwei, sondern drei oder mehrere Modulrollen aufweist. Zum einen können die Rollen gleichmäßig entlang der Rollenplatte verteilt angeordnet sein, so dass sie jeweils die gleiche Last abtragen, denkbar ist aber auch eine Verteilung, bei der einzelne Rollen mehr oder weniger als andere belastet werden. Dies kann beispielsweise dadurch erreicht werden, dass die Rollen unterschiedliche Abstände zur Schwenkachse aufweisen oder rechts und links der Schwenkachse eine unterschiedliche Anzahl an Modulrollen angeordnet ist.

Üblicherweise ist ein Schiebetritt nach dem Stand der Technik durch jeweils zwei beabstandete Rollen in dem entsprechenden Führungsmittel geführt. Erfindungsgemäß kann vorgesehen sein, dass die in Ausfahrrichtung vordere Rolle durch ein Rollenmodul ersetzt wird, denkbar ist selbstverständlich aber auch ein Austausch sämtlicher Rollen durch Rollenmodule. Die Anzahl einzelner Rollen und Rollenmodule ist im Wesentlichen von der Dimension und den zu erwartenden Belastungen der Zustiegshilfe bzw. des Schiebetritts abhängig und kann entsprechend frei gewählt werden.

Das erfindungsgemäße Rollensystem erlaubt eine Reduzierung der Höhe der Zustiegshilfe insbesondere dadurch, dass die Modulrollen einen deutlich geringeren Durchmesser als die sonst üblichen Rollen aufweisen müssen. Dies ergibt sich durch die Verteilung der Belastung auf mehrere Modulrollen. Entsprechend kann der Schiebetritt oder die Trittplatte über sehr niedrig bauende Führungsmittel geführt werden, wodurch die Gesamthöhe der Zustiegshilfe erheblich reduziert wird.

Der Antrieb des Schiebetritts kann verschieden ausgeführt sein, z.B. durch seitliche Spindeln, welche neben dem Antrieb ebenfalls die Funktion der Führung übernehmen, oder auch durch einen zentralen Antrieb, welcher zusätzliche (z.B. seitliche) Führungsmittel erfordert. Weitere Antriebsmöglichkeiten sind ebenfalls realisiert, auf diese wird jedoch im Rahmen dieser Patentanmeldung nicht eingegangen.

Anhand der nachfolgenden Figuren wird die Erfindung näher erläutert. Diese sind nur beispielhaft zu verstehen und sollen den Umfang der Erfindung nicht beschränken. Es zeigen:
- Figur 1:: Bereiche einer Schiebetrittausfahrvorrichtung mit einem Rollensystem nach dem Stand der Technik in perspektivischer Darstellung, mit aus- gefahrenem Schiebetritt,
- Figur 2:: die Schiebetrittausfahrvorrichtung aus Figur 1 im Schnitt,
- Figur 3:: Bereiche einer Schiebetrittausfahrvorrichtung mit erfindungsgemäßem Rollensystem in perspektivischer Darstellung,
- Figur 4:: die Schiebetrittausfahrvorrichtung aus Figur 3 im Schnitt,
- Figur 5:: ein findungsgemäßes Rollenmodul in vergrößerter Darstellung.

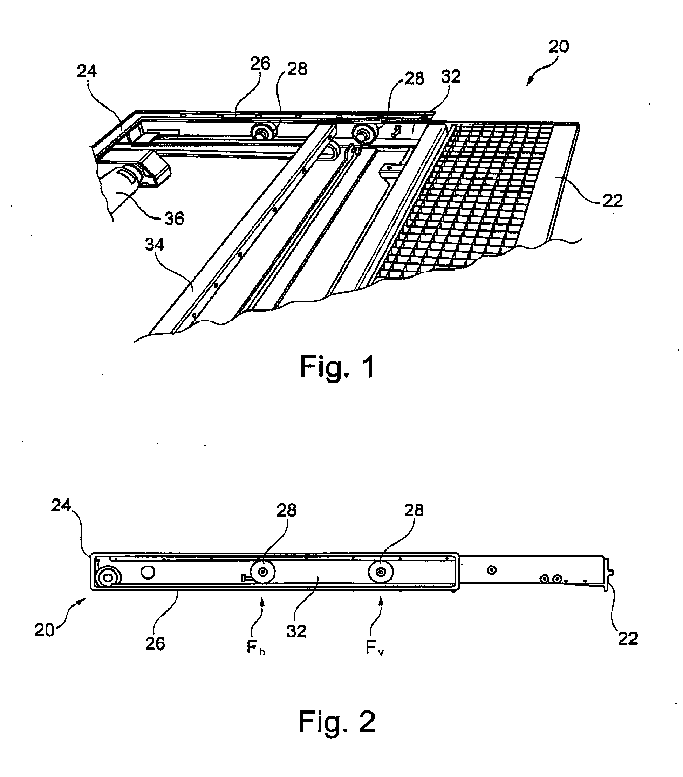

Figur 1 zeigt die wesentlichen Komponenten einer Schiebetrittausfahrvorrichtung 20 mit einem ausgefahrenen Schiebetritt 22. Die Schiebetrittausfahrvorrichtung 20 funktioniert prinzipiell nach Art einer Schublade, die Schiebetritt 22 wird durch eine Öffnung des Gehäuses 24 in dieses ein- oder aus diesem herausgefahren.

Im gezeigten Ausführungsbeispiel sind die in Ein- Ausfahrrichtung verlaufenden Seitenteile des Gehäuses 24 als Führungsmittel 26 ausgeführt, in denen seitlich an dem Schiebetritt 22 angeordnete Rollen 28 geführt sind. Bei der gezeigten Schiebetrittausfahrvorrichtung 20 sind an jeder Seite zwei Rollen 28 vorgesehen. Wie insbesondere Figur 2 zeigt, werden diese Rollen bei einer Belastung des Schiebetritts 22 mit einer entsprechenden resultierenden Kraft Fn und Fv beaufschlagt, wobei die in Ausfahrrichtung vordere Rolle 28 etwa doppelt so stark wie die hintere Rolle 28 belastet wird.

Der Schiebetritt 22 weist eine Platte 30 auf, die zwischen zwei parallel zu den Führungsmitteln 26 verlaufenden Seitenwangen 32 angeordnet ist. Die Seitenwangen 32 wirken sozusagen als Haltearme. Die Seitenwangen 32 bzw. Haltearme sind über eine zusätzliche Querverstrebung 34 miteinander verbunden.

Weiterhin ist ein Antrieb 36 im in Ein- /Ausfahrrichtung hinteren Bereich der Schiebetrittausfahrvorrichtung 20 gezeigt.

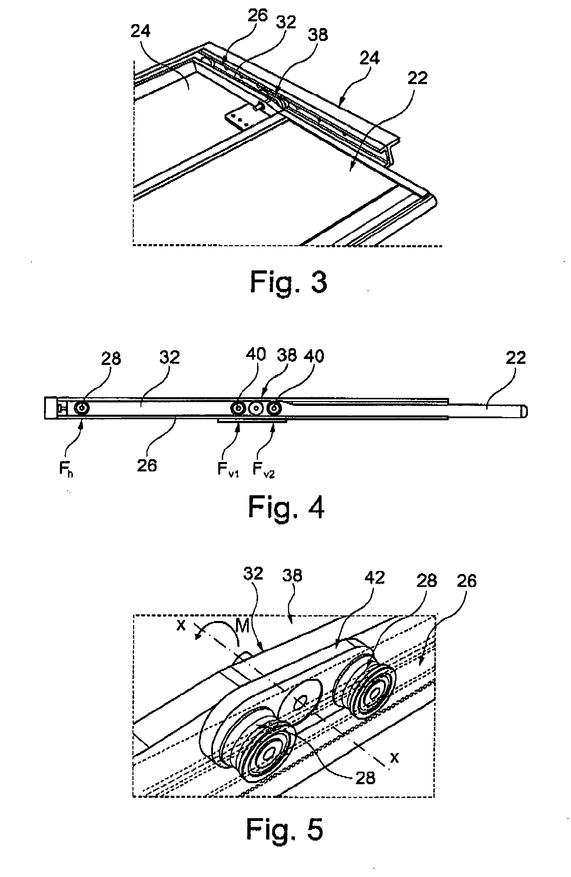

Die nachfolgenden Figuren verdeutlichen das erfindungsgemäße Rollensystem, wobei die erfindungsgemäße Schiebetrittausfahrvorrichtung 20 im Wesentlichen entsprechend der Schiebetrittausfahrvorrichtung 20 nach dem Stand der Technik aufgebaut ist. Deshalb beziehen sich die grundsätzlichen Erläuterungen zu den Bauteilen der Schiebetrittausfahrvorrichtung 20 nach dem Stand der Technik auch auf die erfindungsgemäße Schiebetrittausfahrvorrichtung 20 mit einem erfindungsgemäßen Rollensystem. Dies wird insbesondere aus Figur 3 deutlich, bei der zwar nicht sämtliche Bauteile gezeigt sind (z.B. keinen Antrieb 36), die aber der Schiebetrittausfahrvorrichtung 20 nach dem Stand der Technik im Wesentlichen gleicht.

Als wesentlicher Unterschied ist erkennbar, dass die bei der Schiebetrittausfahrvorrichtung 20 vordere Rolle 28 durch ein erfindungsgemäßes Rollenmodul 38 ersetzt ist. Der Aufbau und die Funktion des Rollenmoduls 38 ergibt sich insbesondere aus den Figuren 4 und 5.

Das Rollenmodul 38 weist im gezeigten Ausführungsbeispiel zwei Rollen (im Folgenden Modulrollen 40) auf, die in einer Rollenplatte 42 drehbar gelagert sind und jeweils in den Führungsmitteln 34 geführt sind. Die Rollenplatte 42 selbst ist wiederum dreh- oder schwenkbar um eine Schwenkachse X-X seitlich am Schiebetritt 22 gelagert. Somit wird die sonst auf die nur eine vordere Rolle 28 wirkende vertikale Kraft Fv gleichmäßig auf zwei Modulrollen 40 verteilt, was gerade bei der in Ein- Ausfahrrichtung vorderen Rollenlagerung aufgrund der dort höheren Belastung von Vorteil ist. Die gleichmäßige Belastung der Modulrollen 40 ergibt sich dadurch, dass diese jeweils den gleichen Abstand zur Schwenkachse X-X aufweisen.

Im gezeigten Ausführungsbeispiel sind die hintere Rolle 28 und das vorne angeordnete Rollenmodul 38 jeweils an der entsprechenden Seitenwange 32 des Schiebetritts 22 angeordnet.

Das erfindungsgemäße Rollensystem erlaubt aufgrund seiner deutlich günstigeren Lastverteilung eine deutlich kleinere Dimensionierung der erfindungsgemäßen Zustiegshilfe, insbesondere einer Schiebetrittausfahrvorrichtung 20. Wie bereits ausgeführt, eignet sich das Rollensystem für sämtliche ausfahrbaren Zustiegshilfen, wobei die Nutzung mit einem Schiebetritt 22 sicherlich als bevorzugte Ausführungsvariante anzusehen ist. Die Erfindung ist aber nicht auf das gezeigte Ausführungsbeispiel beschränkt.

Die erfindungsgemäße Schiebetritteausfahrvorrichtung 20 ist durch ihre in nahezu alle Richtungen schwenkbare Lagerung sehr schnell und einfach zu montieren, die Ansprüche an die Fertigung der Bauteile hinsichtlich ihrer Abmessungen können deutlich niedriger als bei bekannten Schiebetritteausfahrvorrichtungen 20 sein. Der vorhandene Bauraum wird besser ausgenutzt und die Gelenke sind gegenüber Umwelteinflüssen besser geschützt.

## Patentansprüche

1. Ausfahrbare Zustiegshilfe (22) eines Türeinstiegs eines Personenbeförderungsfahrzeuges mit einem Rollensystem, wobei
- die Zustiegshilfe aus einer Ruhestellung in eine Gebrauchsstellung und zurück verfahrbar ist,
- Führungsmittel (26) vorgesehen sind, die jeweils seitlich der Zustiegshilfe in Ein-/Ausfahrrichtung verlaufen und,
- die Zustiegshilfe über Rollen (28) in den Führungsmitteln (34) geführt ist,
**dadurch gekennzeichnet, dass** das Rollensystem der Zustiegshilfe je Führungsmittel (26) zumindest ein Rollenmodul (38) mit einer Rollenplatte (42) aufweist, die um eine Schwenkachse (X-X) schwenkbar an der Seite der Zustiegshilfe gelagert ist und in der mindestens zwei in dem jeweiligen Führungsmittel (26) geführte Modulrollen (40) drehbar gelagert sind.

2. Ausfahrbare Zustiegshilfe nach Anspruch 1, **dadurch gekennzeichnet, dass** die Zustiegshilfe als Schiebetritt (22) ausgeführt ist.

3. Ausfahrbare Zustiegshilfe nach Anspruch 1 oder Anspruch 2, **dadurch gekennzeichnet, dass** die Modulrollen (40) eines Rollenmoduls (38) jeweils den gleichen Abstand zur Schwenkachse (X-X) aufweisen.

4. Ausfahrbare Zustiegshilfe nach Anspruch 1 oder Anspruch 2, **dadurch gekennzeichnet, dass** die Modulrollen (40) eines Rollenmoduls (38) unterschiedlich zur Schwenkachse (X-X) beabstandet sind.

5. Ausfahrbare Zustiegshilfe nach einem der Ansprüche 2 bis 4, **dadurch gekennzeichnet, dass** der Schiebetritt (22) an jeder Seite jeweils eine einzelne Rolle (xy) und ein Rollenmodul (28) aufweist, wobei das Rollenmodul (38) in Ausfahrrichtung des Schiebtritts (22) vorne angeordnet ist.

6. Ausfahrbare Zustiegshilfe nach einem der Ansprüche 2 bis 4, **dadurch gekennzeichnet, dass** der Schiebetritt (22) an jeder Seite zwei Rollenmodule (38) aufweist.

7. Ausfahrbare Zustiegshilfe nach einem der Ansprüche 2 bis 6, **dadurch gekennzeichnet, dass** der Schiebetritt (22) aus zwei parallel zu den Führungsmitteln (26) verlaufenden Seitenwangen (32) und einer dazwischen angeordneten Platte (30) gebildet sind.

8. Ausfahrbare Zustiegshilfe nach Anspruch 7, **dadurch gekennzeichnet, dass** die Seitenwangen (32) an der auf die Ausfahrrichtung des Schiebtritts (22) bezogene Rückseite der Platte (30) vorstehen und somit Haltearme ausbilden.

9. Ausfahrbare Zustiegshilfe nach Anspruch 8, **dadurch gekennzeichnet, dass** die Rollenmodule (38) und Rollen (28) im Bereich der Haltearme angeordnet sind.

10. Ausfahrbare Zustiegshilfe nach einem der Ansprüche 1 bis 9, **dadurch gekennzeichnet, dass** die Schwenkachse (X-X) des Rollenmoduls (38) mittig durch das Rollenmodul (38) verläuft und **dadurch** die Belastung gleichmäßig auf die Modulrollen (40) verteilt wird.

## Claims

1. Extendable boarding aid (22) of an entrance door of a passenger transport vehicle with a roller system, wherein
- the boarding aid can be moved from a resting position into a using position and back,
- guiding means (26) are provided which respectively extend laterally of the boarding aid in the extending/retraction direction, and
- the boarding aid is guided over rollers (28) in the guiding means (34),
**characterised in that**
the roller system of the boarding aid comprises, for each guiding means (26), at least one roller module (38) with a roller plate (42) which is mounted at the side of the boarding aid so as to be pivotable about a pivot axis (X-X), and In which at least two of the module rollers (40) guided in the respective guiding means (26) are rotatably mounted.

2. Extendable boarding aid according to claim 1, **characterised in that** the boarding aid is designed as a sliding step (22).

3. Extendable boarding aid according to claim 1 or claim 2, **characterised in that** the module rollers (40) of a roller module (38) each have the same distance from the pivot axis (X-X).

4. Extendable boarding aid according to claim 1 or claim 2, **characterised in that** the module rollers (40) of a roller module (38) have a different distance from the pivot axis (X-X).

5. Extendable boarding aid according to any one of the claims 2 to 4,
**characterised in that** the sliding step (22) comprises a single roller (xy) and a roller module (28) on each side respectively, the roller module (38) being disposed at the front, relative to the extension direction of the sliding step (22).

6. Extendable boarding aid according to any one of the claims 2 to 4,
**characterised in that** the sliding step (22) has two roller modules (38) on each side.

7. Extendable boarding aid according to any one of the claims 2 to 6,
**characterised in that** the sliding step (22) is formed from two side cheeks (32) extending parallel to the guiding means (26) and a plate (30) disposed therebetween.

8. Extendable boarding aid according to claim 7, **characterised in that** the side cheeks (32) protrude on the rear of the plate (30), relative to the extension direction of the sliding step (22), thus forming supporting arms.

9. Extendable boarding aid according to claim 8, **characterised in that** the roller modules (38) and the rollers (28) are disposed in the region of the supporting arms.

10. Extendable boarding aid according to any one of the claims 1 to 9,
**characterised in that** the pivot axis (X-X) of the roller module (38) extends centrally through the roller module (38) and that thus, the load is evenly distributed onto the module rollers (40).

## Revendications

1. Aide à la montée déployable (22) d'une entrée de porte d'un véhicule de transport en commun, comprenant un système à rouleaux,
- ladite aide à la montée étant apte à être déplacée à partir d'une position de repos dans une position d'utilisation et à être redéplacée,
- des moyens de guidage (26) étant prévus qui s'étendent chacun latéralement de ladite aide à la montée dans les directions de rentrée/sortie et
- ladite aide à la montée étant guidée par des rouleaux (28) dans lesdits moyens de guidage (34),
**caractérisée par le fait que** ledit système à rouleaux de ladite aide à la montée présente par moyen de guidage (26) au moins un module à rouleaux (38) avec une plaque pour rouleaux (42) qui est logée à pivotement autour d'un axe de pivotement (X-X) sur le côté de ladite aide à la montée et dans laquelle sont logés à rotation au moins deux rouleaux de module (40) guidés dans le moyen de guidage (26) respectif.

2. Aide à la montée déployable selon la revendication 1, **caractérisée par le fait que** ladite aide à la montée est réalisée sous forme d'un marchepied coulissant (22).

3. Aide à la montée déployable selon la revendication 1 ou la revendication 2, **caractérisée par le fait que** lesdits rouleaux de module (40) d'un module à rouleaux (38) présentent chacun la même distance par rapport à l'axe de pivotement (X-X).

4. Aide à la montée déployable selon la revendication 1 ou la revendication 2, **caractérisée par le fait que** lesdits rouleaux de module (40) d'un module à rouleaux (38) présentent une distance différente par rapport à l'axe de pivotement (X-X).

5. Aide à la montée déployable selon l'une quelconque des revendications 2 à 4, **caractérisée par le fait que** ledit marchepied coulissant (22) présente sur chaque coté respectivement un rouleau individuel (xy) et un module à rouleaux (38), ledit module à rouleaux (38) étant disposé à l'avant vu dans la direction de sortie du marchepied coulissant (22).

6. Aide à la montée déployable selon l'une quelconque des revendications 2 à 4, **caractérisée par le fait que** ledit marchepied coulissant (22) présente deux modules à rouleaux (38) sur chaque côté.

7. Aide à la montée déployable selon l'une quelconque des revendications 2 à 6, **caractérisée par le fait que** ledit marchepied coulissant (22) est constitué par deux faces latérales (32) qui s'étendent parallèlement aux moyens de guidage (26) ainsi que par une plaque (30) disposée entre celles-ci.

8. Aide à la montée déployable selon la revendication 7, **caractérisée par le fait que** lesdites faces latérales (32) font saillie de la face arrière de la plaque (30), rapportée à la direction de sortie du marchepied coulissant (22), et forment ainsi des bras de maintien.

9. Aide à la montée déployable selon la revendication 8, **caractérisée par le fait que** lesdits modules à rouleaux (38) et les rouleaux (28) sont disposés au niveau des bras de maintien.

10. Aide à la montée déployable selon l'une quelconque des revendications 1 à 9, **caractérisée par le fait que** ledit axe de pivotement (X-X) du module à rouleaux (38) s'étend à travers le centre du module à rouleaux (38) ce par quoi la charge est répartie uniformément sur les rouleaux de module (40).
